# EUROPEAN PATENT SPECIFICATION

(11) **EP 3 753 899 B1**
(45) Date of publication and mention of the grant of the patent: **31.05.2023**
(21) Application number: 19181763.4
(22) Date of filing: 21.06.2019
(51) Int. Cl.: B66F 17/00, B66F 9/075, B62D 51/02

(54) **ANTI-TRAPPING ROTATING OPERATOR PLATFORM**
ROTIERENDE STANDPLATTFORM MIT EINKLEMMSCHUTZ
PLATEFORME D'OPÉRATEUR ROTATIVE ANTI-PIÉGEAGE

(43) Date of publication of application: 23.12.2020
(73) Proprietor: Hyster-Yale Group, Inc., Fairview, OR 97024 (US)
(72) Inventor: Consolaro, Diego, 20060 Masate (IT); Xibilia, Fausto, 20060 Masate (IT)
(74) Representative: Mader, Joachim

(56) References cited:
- EP-A1- 2 239 187
- DE-A1- 4 021 986

## Description

### Technical Field

Embodiments relate to vehicle features, and more particularly, to vehicle operator platforms configured to help prevent operator trapping.

### Background

Materials handling vehicles, such as pallet trucks like a platform pallet truck or platform stacker truck, are typically employed in settings requiring handling of palletized goods, such as factories, warehouses, distribution centers, stock rooms, loading docks, etc. Such vehicles are typically equipped with a mechanism for handling the palletized goods, typically comprised of a relatively large, two-tined fork, configured to insert into a pallet. The fork, in turn, is connected to a lift or hoist mechanism, to allow the palletized goods to be suspended from the fork and so moved about by the vehicle. Depending upon the intended use, a pallet or stacker truck may be configured to be operated from either a walking position, with the operator walking along with the truck as it moves, and/or from a riding position, with the operator riding on part of the truck. A riding position can allow the truck to operate at a higher rate of speed than available when operated from a walking position, where the truck by necessity cannot move faster than the operator can walk.

The document EP 2 239 187 A1 discloses a system for detection of the position of a pivotal platform in a truck. The system comprises a control system arranged to control safety functions of the truck depending on the position of the platform.

The background description provided herein is for the purpose of generally presenting the context of the disclosure. Unless otherwise indicated herein, the materials described in this section are not prior art to the claims in this application and are not admitted to be prior art by inclusion in this section.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Fig. 1 illustrates an example flowchart of the operations to control a vehicle with an anti-trapping mode, according to various embodiments.
Fig. 2 is a block diagram of the components of an example vehicle that may carry out the operations of Fig. 1, according to various embodiments.
Fig. 3 is a side view of an example operator platform depicting various angle ranges used as input to the operations of Fig. 1, according to various embodiments.
Fig. 4 is a chart relating the output curves to sensed angles of an example position sensor that may be used to detect the angle of an operator platform, according to various embodiments.
Fig. 5 is a perspective view of an example operator platform in an open position attached to a platform pallet truck, according to various embodiments.
Fig. 6 is a perspective view of an example operator platform in a closed position attached to a platform pallet truck, according to various embodiments.
Fig. 7 is a perspective view of an example operator platform in a partially open position where a user's foot could be trapped, according to various embodiments.
Fig. 8 is a perspective view of an example platform pallet truck depicting side gates in a closed position, according to various embodiments.
Fig. 9 is a perspective view of an example platform pallet truck depicting side gates in an open position, according to various embodiments.
Fig. 10 is a block diagram of an example computer that can be used to implement some or all of the operations of Fig. 1 and/or the controller of Fig. 2, according to various embodiments.
Fig. 11 is a block diagram of a computer-readable storage medium that can be used to implement some of the components of the system or methods disclosed herein, according to various embodiments.

### Detailed Description

The invention is defined by a computer-implemented method according to claim 1, a data-processing apparatus according to claim 5, a computer program according claim 6, a computer-readable storage medium according claim 7 and a system according to claim 8.

In the following detailed description, reference is made to the accompanying drawings which form a part hereof wherein like numerals designate like parts throughout, and in which is shown by way of illustration embodiments that may be practiced.

Aspects of the disclosure are disclosed in the accompanying description. It should be noted that like elements disclosed below are indicated by like reference numbers in the drawings.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "circuitry" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

Vehicles, including materials handling vehicles such as platform pallet trucks and platform stacker trucks, can be used with the operator either walking adjacent to the vehicle, or riding on the vehicle. To facilitate this dual usage, some vehicles are equipped with an operator platform that can be moved between a stowed position, for walking operation, and a deployed position, for riding operation. The platform itself is typically a plate structure mounted to the vehicle proximate to the ground. When deployed, the operator can stand on the platform and operate the controls in a similar fashion to walking operation. As mentioned above, the vehicle may be configured to operate in different modes depending on whether it is operated from a walking or riding position, with the riding position allowing the vehicle to be operated at a higher rate of speed.

A vehicle can be configured to restrict the vehicle from operating at full speed unless the operator is riding on the operator platform. One way to achieve this restriction is by sensing the position of the operator platform, and only enabling full speed if the platform is in a fully deployed position. The vehicle may further be configured to only allow operation in a walking mode if the operator platform is in a fully stowed position, to ensure the platform is not in a position that may interfere with the operator keeping pace with the vehicle.

A vehicle may attach the operator platform to the vehicle chassis or body via a hinge, where the operator platform can rotate between fully stowed and fully deployed positions. A sensor may be coupled to the operator platform to detect when the platform is in the fully stowed position (for walking operation), the fully deployed position (for riding operation), or is in a transitional position such that vehicle operation should be disabled.

Disabling vehicle operation when the operator platform is in a transitional position, however, can itself pose issues. For example, if an operator is standing on the platform to operate the vehicle in full-speed riding mode, the operator could become trapped if the operator inadvertently backs the vehicle into an obstacle that forces the platform up away from the deployed position towards a stowed position. Either or both of the operator's feet (or another body part) may thus become wedged between the partially closed platform and the substantially vertical side of the vehicle, which could result in injury to the operator. This risk of entrapment may further be exacerbated by the aforementioned feature that disables vehicle operation when the operator platform is not in either the fully deployed or fully stowed positions. If the object against which the vehicle was backed is relatively immovable and the vehicle itself cannot be moved by the operator, the operator may be trapped by the operator platform because the operator platform may not be able to be extended until the vehicle is moved away from the object. Thus, the operator may be trapped until assistance can be obtained.

Disclosed embodiments provide a solution to this problem, by detecting when the operator platform is in a range that poses a risk of operator entrapment. If the platform is detected to be in a position between the fully deployed or fully stowed positions, rather than disabling vehicle operation, the vehicle can be enabled to move at a relatively slow pace in a direction only away from the obstacle, and optionally for a limited amount of time. Such a mode can allow the vehicle to be moved clear of the obstacle and the operator platform returned to a deployed position, thus untrapping the operator.

The embodiments disclosed herein are depicted with respect to a platform pallet truck. However, it should be understood that the disclosed embodiments may be implemented on any vehicle that includes an operator platform, and which may be operated with the platform in either a deployed position, with the operator riding upon the platform, or a stowed position, with the operator walking alongside the vehicle. Examples of such vehicles may include platform pallet trucks, platform stacker trucks (similar to a pallet truck, but including a mast structure to allow stacking of goods and access to goods on elevated platforms), forklifts, cranes, tugs, and/or any other vehicle that is suitable to be equipped with a rotating operator's platform.

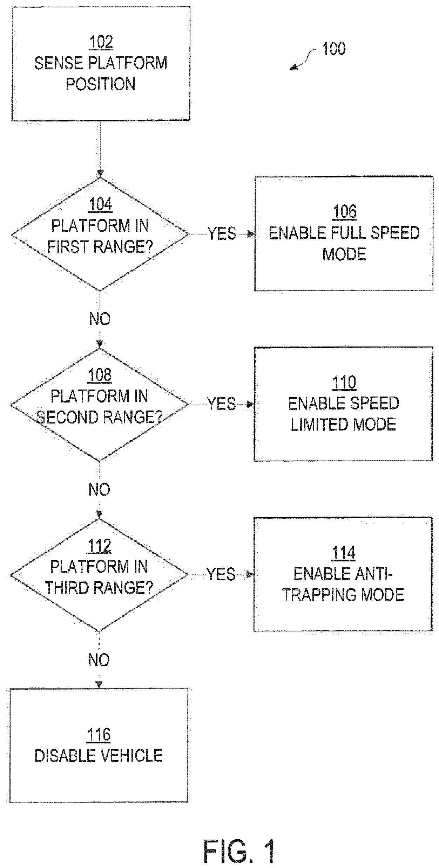

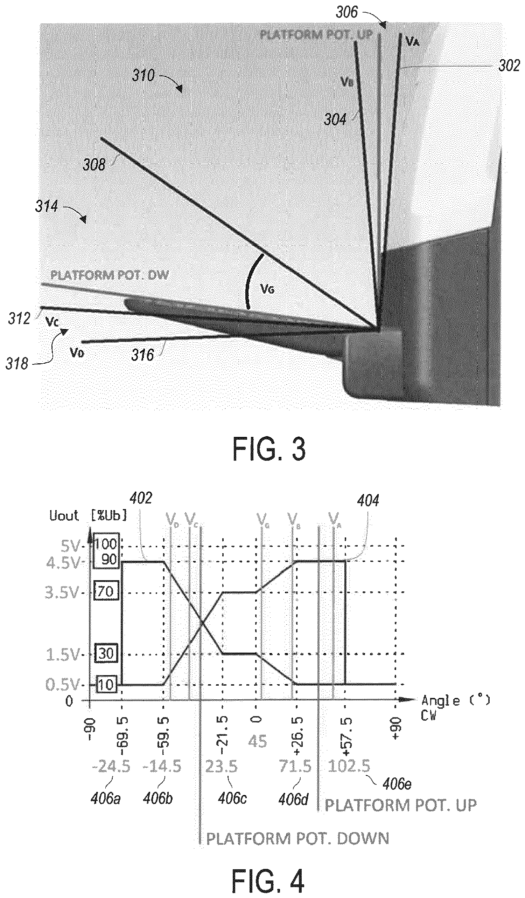

Fig. 1 is a flowchart of the operations for an example process 100 implementing an anti-trapping operator platform, such as may be equipped to a vehicle. Starting in block 102, the position of an operator platform is detected. In the embodiments disclosed herein, the operator platform position may be expressed in terms of angular position, with reference to a fully opened and/or fully closed position. For example, the platform may be considered fully open when at a 0 degree angle with respect to a plane defined by the ground, e.g. parallel to the plane of the fork tines. Likewise, the platform may be considered to be fully closed or stored when at a 90 degree angle with respect to the ground plane. The operator platform may be located at a position between fully open or fully closed or, in some cases, may be outside these positions. These various positions will be depicted and described in greater detail herein with respect to Figs. 3-7. Further, although the operator position is described in terms of an angle herein, the position may be expressed in other metrics, e.g. linear distances, depending upon the specifics of a given embodiment.

Following sensing of the operator platform position, in block 104 the position is evaluated for whether it is located in a first range of positions. In the example of Fig. 1, the first range of positions corresponds to the operator platform in a deployed or open position, substantially parallel to the ground plane. In such a position, an operator may stand on the platform in a riding position. If the operator platform is detected in such a position (the "YES" branch from block 104), then full speed operation of the vehicle may be enabled in block 106. "Full speed operation" and "full-speed mode", as used herein, means that the vehicle is configured to travel up to the maximum speed possible or permissible (such as where the vehicle is configured with a maximum speed determined by facility rules) from the vehicle's drive system, e.g. traction motor or motors and any associated transmission. Full speed operation may exceed the speed at which an operator could walk or even run.

If the operator platform is not within the first range of positions (the "NO" branch from block 104), in block 108 the position is evaluated for whether it is located in a second range of positions. In the example of Fig. 1, the second range of positions corresponds to the operator platform in a stowed or closed position, substantially perpendicular to the ground plane. In such a position, an operator will typically be standing on the ground adjacent to the vehicle, and walking along with the vehicle as the vehicle is operated. Thus, if the platform is detected to be within the second range of positions (the "YES" branch from block 108), then the vehicle may be placed into a speed-limited mode in block 110. In the speed-limited mode, the vehicle may be limited to a maximum speed comparable to a comfortable walking speed. As the operator will likely be walking adjacent to the vehicle rather than riding upon it, the speed-limited mode helps ensure the operator cannot inadvertently accelerate the vehicle to a speed beyond which the operator can keep up with, and so maintain control of, the vehicle.

If the operator platform is not within the second range of positions (the "NO" branch from block 108), in block 112 the platform position is evaluated for whether it is located within a third range of positions. In the example of Fig. 1, the third range of positions corresponds to a platform that is partially closed, e.g. adjacent to the second range of positions that correspond to a fully closed position. If the platform is detected to be within the third range of positions (the "YES" branch from block 112), then the vehicle may be placed into an anti-trapping mode in block 114. The anti-trapping mode, as its name implies, is intended to allow an operator to either avoid being trapped, or to get untrapped if a foot or other part of the operator's body is trapped or wedged between the operator platform and the side of the vehicle. The third range, as will be discussed further herein with respect to Fig. 3, may be adjacent to the second range, the first range, or both, depending upon the specifics of a given implementation.

As may be understood, the platform would likely enter the third range of positions from the first range of positions, with an operator standing on the platform. For example, if the operator backed the vehicle too close to an obstacle on the operator side (opposite from the fork tines), the platform may come into contact with the platform and, as the vehicle continues to move, be caused to rotate towards the closed, second position. This rotation would be halted by the presence of the operator's feet and/or legs, which may thus become wedged or otherwise stuck between the platform and the side of the vehicle, potentially resulting in injury to the operator. The anti-trapping mode, in embodiments, enables the vehicle to move at a relatively slow speed, only in a direction away from the obstacle, typically in the direction of the fork tines. The speed may be slower than the walking speed enabled in the speed limited mode of block 110.

The anti-trapping speed may further be time-limited, where the vehicle is permitted to move forward at the relatively slow speed only for a predetermined time, sufficient to allow the vehicle to move away from the obstacle enough to cause the platform to open towards a fully deployed position. In some embodiments, the vehicle may move enough to allow the platform to open to a partially deployed position where the operator is untrapped, but further operation is prohibited. In other embodiments, the vehicle may move enough to allow the platform to open to a fully deployed position, where the operator is again riding on the vehicle and the vehicle is enabled to operate in full speed mode, per block 106. Optionally, the vehicle may be limited to the anti-trapping mode speed after the platform reaches the fully deployed position and the full speed mode may be enabled by the operator entering a code into the vehicle, shutting the vehicle off and restarting it, or otherwise suitably resetting the vehicle to the full speed mode.

If the operator platform is not within the third range of positions (the "NO" branch from operation 112), in block 116 the vehicle may be disabled, as the platform would be detected to be in a position that does not correspond to fully deployed (first range), fully stowed (second range), or a risk of trapping the operator (third range). Thus, in such embodiments the operator platform would be considered to be in an improper position, and the vehicle accordingly disabled until the platform is returned to either the first or second range of positions.

Embodiments may add more or fewer blocks for other ranges of positions. For example, some embodiments may also detect for a fourth range, such as between the first range and third range, where the vehicle may be placed into an interdiction mode. In such a mode, vehicle movement may be prohibited, but carriage and fork lowering may still be enabled. Other modes may also be implemented, depending upon the needs of a specific embodiment.

It should be understood that not all steps of process 100 may be carried out in a given embodiment, while other embodiments may add additional modes. Further, the order of the blocks may vary, e.g. the third range of positions may be detected first, followed by the first and/or second, or another suitable order.

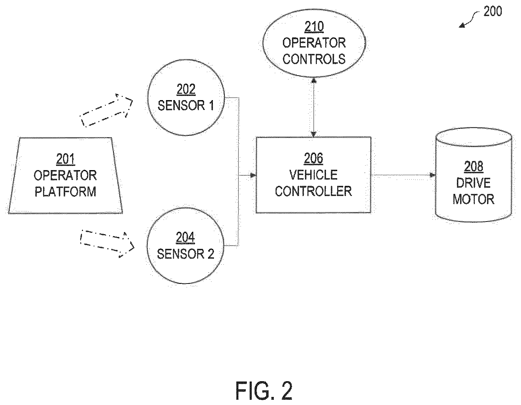

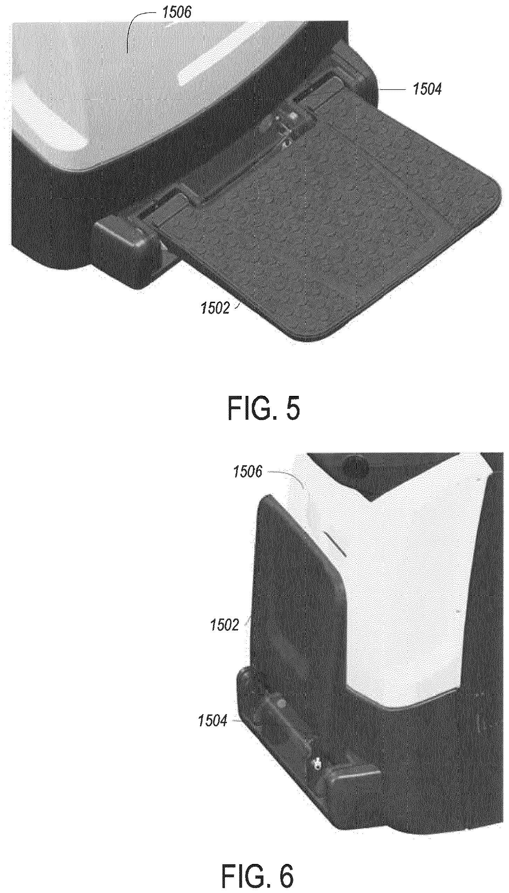

Turning to Fig. 2, a block diagram of components of an example system 200 for implementing process 100 are depicted. A given embodiment may add additional blocks or may have fewer blocks, depending upon the needs of a specific embodiment. The components of example system 200 include the operator platform 201, a first sensor 202, a second sensor 204, a vehicle controller 206, a drive motor 208, and operator controls 210. Operator platform 201 is configured to support the weight of an operator of a vehicle, and attaches to the vehicle so that it can be moved between a stowed and deployed configuration. Operator platform 201 will be described in greater detail herein with respect to Figs. 5-7.

In the depicted embodiment, the position of operator platform 201 is detected by first sensor 202 and second sensor 204. Other embodiments may use only a single sensor to detect the position of operator platform 201. Each of first sensor 202 and second sensor 204 may be configured to output the same measurement of the operator platform position in a redundant fashion, or may be configured to output inverse measurements of the operator platform position to provide a cross check, as will be discussed below with respect to Fig. 4. First sensor 202 and second sensor 204 may be implemented in a single housing, or may be implemented as two physically separate components, which may further be equipped to different locations of operator platform 201. Further, first sensor 202 and second sensor 204 may be the same or different types of sensors, and may output a similar or different types of measurement signals, depending upon the need of a given implementation.

In embodiments, first sensor 202 and second sensor 204 are configured to output the position of the operator platform 201 in terms of angular position, as will be discussed herein with respect to Figs. 3 and 4. In some embodiments, first sensor 202 and second sensor 204 are implemented as Hall sensors, and further are configured to output inverse signals, e.g. when the platform is at one extreme of travel or the other, one sensor outputs a signal that indicates a platform position approximately 90 degrees opposed to the platform position indicated by the other sensor.

Each of first sensor 202 and second sensor 204 are coupled to vehicle controller 206. In embodiments, first sensor 202 and second sensor 204 are coupled electrically to controller 206, and may supply the detected position of the operator platform 201 in either a digital value, or an analog measurement. The particular output of a given sensor may depend upon the specifications of vehicle controller 206.

Vehicle controller 206 accepts as inputs measurements from first sensor 202 and second sensor 204, as well as operator controls 210. In response to the inputs, vehicle controller 206 outputs drive commands to drive motor 208. Vehicle controller 206 may also control other systems on a vehicle which are not depicted here, e.g., indicator lamps, lift or hoist pumps, braking systems, monitoring of batteries or other power sources, lights, horns, and/or any other systems appropriate to a given vehicle implementation.

Vehicle controller 206, in embodiments, implements one or more blocks of process 100. Vehicle controller 206 may implement process 100 via software, firmware, hardware, or a combination of the foregoing. Vehicle controller 206 itself may be implemented as a general purpose computer, such as a computer that employs a general purpose processor, e.g. Intel iAPX, AMD, ARM, MIPS, or another suitable processor type, with process 100 implemented in software. Other embodiments may implement vehicle controller 206 using a microcontroller, such as an Atmel or another suitable type of microcontroller or embedded microcontroller, with process 100 implemented in software or firmware. Still other embodiments may implement process 100 using hardware solutions such as a field-programmable gate array (FPGA) or application-specific integrated circuit (ASIC). Yet other embodiments may implement vehicle controller 206 with discrete components and/or discrete logic components, where the various blocks of process 100 are implemented in logic gates. Finally, some embodiments of vehicle controller 206 may use a combination of any of the foregoing, as appropriate to a given implementation.

Vehicle controller 206 may receive input from operator control 210, which can include, e.g., a throttle for controlling acceleration, a brake for controlling deceleration, an operating mode switch, emergency brake controls, dead-man's switch, vehicle direction control (Forward-Neutral-Reverse), etc. For example, operator controls 210 may include an enable button that must be actuated when the vehicle is in anti-trapping mode to enable the vehicle to move. Operator controls may also, in some embodiments, provide directional control and/or steering.

In the depicted embodiment, vehicle controller 206 is in electrical communication or otherwise coupled to one or more drive motors 208. Vehicle controller 206 may interface with one or more drive motors 208 via one or more electronic speed controllers (not shown), and further may be connected to a power source such as a vehicle battery or accessory battery (also not shown). Vehicle controller 206 thus may provide signaling, in embodiments, to modulate the power (or to cause a speed controller to modulate the power) to the one or more drive motors 208 so as to control the overall speed of the vehicle. By this modulation, vehicle controller 206 can implement the various speed modes and the anti-trapping mode described above with respect to process 100. Further, vehicle controller 206 may also be coupled to or otherwise control other accessories, such as a lift motor or motors connected to the fork for raising or lowering materials being handled, and/or one or more hydraulic pumps which may actuate various vehicle systems, including a lift mechanism and/or drive motor, depending upon the specifics of a given embodiment of the vehicle.

Turning to Fig. 3, a diagram of the various position ranges for the operator platform for an example embodiment are depicted. In the depicted embodiment, the position ranges are depicted as angle ranges, as the depicted vehicle uses one or more angular sensors to determine the position of the operator platform. Starting with the operator platform fully up in a stowed position, a range of positions 306 is defined by a first angle V_{A} 302 and a second angle V_{B} 304. Range of positions 306 may correspond to the second range of positions described above with respect to operation 108, where the vehicle operates in a speed limited mode due to the operator platform being stowed. Next, a range of positions 310, defined by second angle 304 and a third angle 308, may correspond to the anti-trapping range. As will be understood by a person skilled in the art, range 310 includes angles in which an operator's foot or other part may be trapped between the operator platform and the side of the vehicle, with the operator platform essentially pinching the operator's limb. Continuing further, a range of positions 314 is defined between third angle 308 and fourth angle V_{C} 312. In this range, the operator platform is not fully deployed, but also is not typically in a range where an operator could be trapped. Range 314 can correspond to an interdiction mode range, described above, where the vehicle may be disabled from operation, but the forks may be allowed to lower. Finally, a range of positions 318 corresponding to full deployment is defined between fourth angle 312 and fifth angle V_{D} 316. Any angles reported by the angular sensor outside of ranges 306, 310, 314, and 318 may be considered out of range, which can, depending upon a given implementation of process 100 and/or controller 206, result in the vehicle being completely disabled. It should be understood that some embodiments may define more or fewer ranges for detection. Further, the position of the various angles defining the ranges may vary depending upon the specifics of a given implementation.

Other embodiments that use a type of sensor and platform configuration that differs from Fig. 3, e.g. linear sensors, a platform that translates laterally, etc., may define positions differently from the depicted rotational angles, in a manner appropriate to a given sensor implementation.

In Fig. 4, the output of a first and second sensor, such as first sensor 202 and second sensor 204 of system 200, are depicted. The first and second sensors 202 and 204, as depicted, are configured to output inverse signals. For example, referring to angle 406a, first sensor output curve 402 is depicted at 4.5V, and the second sensor output curve 404 is depicted at 0.5V, for the identical angle 406a. The curves intersect and cross over roughly half-way through the travel of the operator platform. As may be seen, angle 406a corresponds to an actual platform angle of -24.5 degrees in the given embodiment, well beyond the typical range seen when the operator platform is fully deployed. Such a range may indicate that the platform is broken or somehow compromised, the sensor is broken or compromised (an implementation equipped with dual sensors can fall back to the remaining sensor if it is determined that one has failed), or that the operator platform and/or one or more sensors is in an unsafe condition.

Angles 406a, 406b, 406c, 406d, and 406e are various possible reference angles for sensors 202 and 204. As may be seen, the various angles V_{A} to V_{D} are not necessarily coterminous with the angles V_{A} through V_{D}, but also map out different spots in which the output 402 and 404 from each sensor is non-linear. The curves depicted in Fig. 4 are one possible implementation. Depending upon the specifics of the sensors for a given implementation, the response curves may vary in any fashion suitable to a given implementation. As may be seen, angle 406a corresponds to a detected angle of -24.5 degrees, angle 406b corresponds to a detected angle of -14.5 degrees, angle 406c corresponds to a detected angle of 23.5 degrees, angle 406d corresponds to a detected angle of 71.5 degrees, and angle 406e corresponds to a detected angle of 102.5. As with angle 406a, angle 406e may be outside the acceptable range, and may result in vehicle deactivation. It should be understood that each angle 406a through 406e as well as the various angles V_{A} through V_{E} may vary depending upon the specifics of a given embodiment, and further a given embodiment may have more or fewer angles.

Turning now to Figs. 5-7, an operator platform 1502 is shown attached to a side 1506 of an example materials handling vehicle in a fashion that allows it to rotate between a stowed and deployed position. Also depicted in Figs. 5 and 6 are sensor assembly 1504, which may, in embodiments, comprise both first sensor 202 and second sensor 204 in a single housing. Sensor assembly 1504, as may be seen, is coupled to a hinge point for the operator platform 1502, so that it can measure and output the detected angle of the operator platform 1502 across its range of travel.

Fig. 5 depicts the operator platform 1502 in a fully deployed configuration. As can be seen, platform 1502 is approximately perpendicular to the side 1506 of the vehicle. As such, platform 1502 is also approximately or substantially parallel to a plane defined by the ground underneath the vehicle. When platform 1502 is in the position depicted in Fig. 5, an embodiment deploying process 100 may place the vehicle in full-speed mode.

Fig. 6 similarly depicts the operator platform 1502 in a fully stowed position, where platform 1502 is approximately parallel to the side 1506 of the vehicle, and also approximately perpendicular to the ground plane. When platform 1502 is in the position depicted in Fig. 6, an embodiment deploying process 100 may place the vehicle into a reduced-speed or walking mode.

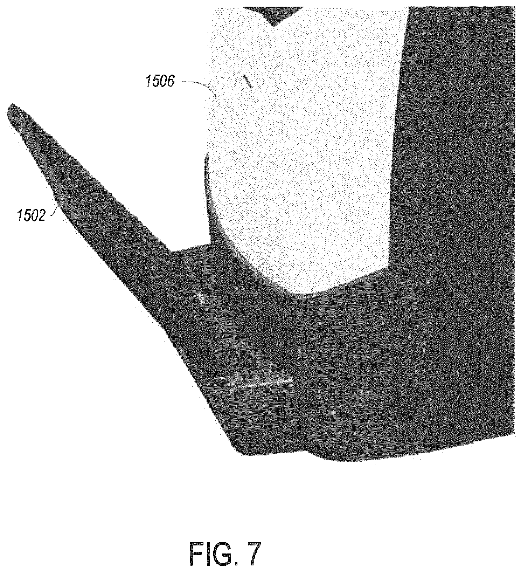

Fig. 7 depicts the operator platform in a configuration that may lead to a foot or other body part of an operator getting trapped between the operator platform 1502 and the side 1506 of the vehicle. Further displacement of the operator platform 1502 towards side 1506 would result in a trapped operator's foot or other body part having increasing force applied to it. Thus, when operator platform 1502 is detected in the position depicted in Fig. 7, the anti-trapping mode described above with respect to process 100 may be engaged.

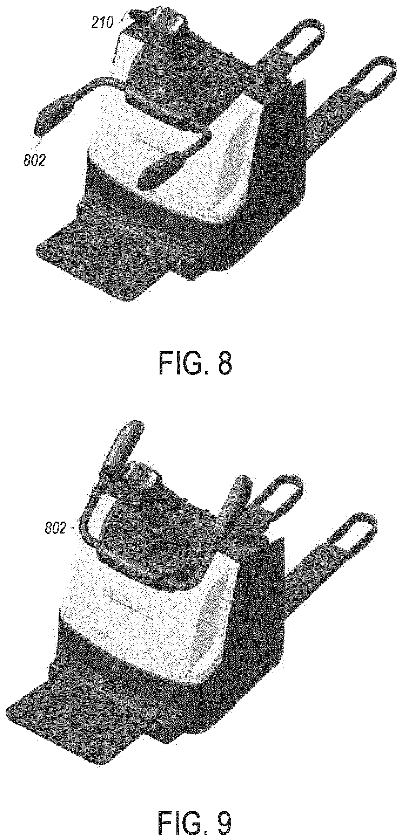

In Fig. 8, an example vehicle, here, a platform pallet truck, is depicted with operator controls 210, as well as side gate 802. Operator controls 210 may include those described above, and operator controls 210 may further be used to steer or otherwise direct the vehicle. Side gates 802 are depicted as being down, or deployed. Fig. 9, conversely, depicts the side gates 802 up, or stowed. The side gates 802 may provide an additional feature for the vehicle, particularly when the vehicle is operated in full speed mode, with the operator platform deployed in a riding position, as shown in Figs. 8 and 9.

When the vehicle operates at full speed, the operator may be subject to centrifugal forces as the vehicle rounds corners. If the speed of the vehicle through the curve is sufficient, an operator may find it difficult to both steer and hang on to the vehicle. By employing side gates 802, the operator is provided with support to maintain position and balance on the vehicle when operated at relatively high speeds, particularly around corners.

The side gates 802 may be connected to the controller, such as controller 206. The controller may be configured to reduce the maximum speed available to the operator of the vehicle when the side gates 802 are stowed (as in Fig. 9), and be configured to allow the maximum speed to the operator of the vehicle when the side gates 802 are deployed, approximately parallel to the operator platform (as in Fig. 8). The position of the side gates 802 may be detected using a sensor substantially similar to the sensor equipped to the operator platform.

Different embodiments may omit the side gates 802, or may configure them differently. Further, different embodiments may vary the response to the side gates 802 being positioned in various positions, with more or fewer mode changes depending upon the needs of a given implementation.

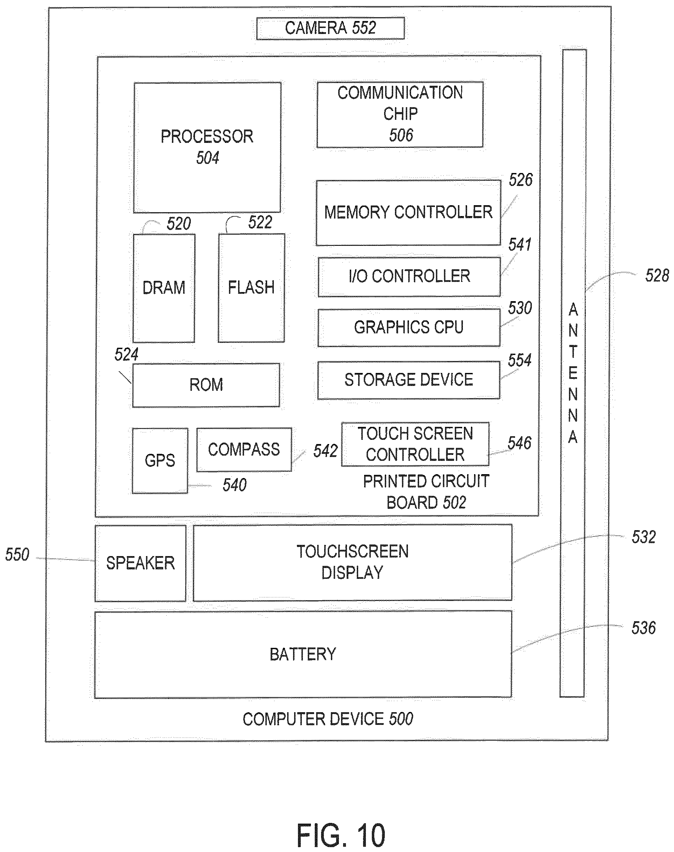

Fig. 10 illustrates an example computer device 500 that may be employed by the apparatuses and/or methods described herein, such as process 100 and/or vehicle controller 206, in accordance with various embodiments. As shown, computer device 500 may include a number of components, such as one or more processor(s) 504 (one shown) and at least one communication chip 506. In various embodiments, the one or more processor(s) 504 each may include one or more processor cores. In various embodiments, the one or more processor(s) 504 may include hardware accelerators to complement the one or more processor cores. In various embodiments, the at least one communication chip 506 may be physically and electrically coupled to the one or more processor(s) 504. In further implementations, the communication chip 506 may be part of the one or more processor(s) 504. In various embodiments, computer device 500 may include printed circuit board (PCB) 502. For these embodiments, the one or more processor(s) 504 and communication chip 506 may be disposed thereon. In alternate embodiments, the various components may be coupled without the employment of PCB 502.

Depending on its applications, computer device 500 may include other components that may be physically and electrically coupled to the PCB 502. These other components may include, but are not limited to, memory controller 526, volatile memory (e.g., dynamic random access memory (DRAM) 520), non-volatile memory such as read only memory (ROM) 524, flash memory 522, storage device 554 (e.g., a hard-disk drive (HDD)), an I/O controller 541, a digital signal processor (not shown), a crypto processor (not shown), a graphics processor 530, one or more antennae 528, a display, a touch screen display 532, a touch screen controller 546, a battery 536, an audio codec (not shown), a video codec (not shown), a global positioning system (GPS) device 540, a compass 542, an accelerometer (not shown), a gyroscope (not shown), a speaker 550, a camera 552, and a mass storage device (such as hard disk drive, a solid state drive, compact disk (CD), digital versatile disk (DVD)) (not shown), and so forth.

In some embodiments, the one or more processor(s) 504, flash memory 522, and/or storage device 554 may include associated firmware (not shown) storing programming instructions configured to enable computer device 500, in response to execution of the programming instructions by one or more processor(s) 504, to practice all or selected aspects of the process 100 and/or vehicle controller 206 described herein. In various embodiments, these aspects may additionally or alternatively be implemented using hardware separate from the one or more processor(s) 504, flash memory 522, or storage device 554.

The communication chips 506 may enable wired and/or wireless communications for the transfer of data to and from the computer device 500. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 506 may implement any of a number of wireless standards or protocols, including but not limited to IEEE 802.20, Long Term Evolution (LTE), LTE Advanced (LTE-A), General Packet Radio Service (GPRS), Evolution Data Optimized (Ev-DO), Evolved High Speed Packet Access (HSPA+), Evolved High Speed Downlink Packet Access (HSDPA+), Evolved High Speed Uplink Packet Access (HSUPA+), Global System for Mobile Communications (GSM), Enhanced Data rates for GSM Evolution (EDGE), Code Division Multiple Access (CDMA), Time Division Multiple Access (TDMA), Digital Enhanced Cordless Telecommunications (DECT), Worldwide Interoperability for Microwave Access (WiMAX), Bluetooth, derivatives thereof, as well as any other wireless protocols that are designated as 3G, 4G, 5G, and beyond. The computer device 500 may include a plurality of communication chips 506. For instance, a first communication chip 506 may be dedicated to shorter range wireless communications such as Wi-Fi and Bluetooth, and a second communication chip 506 may be dedicated to longer range wireless communications such as GPS, EDGE, GPRS, CDMA, WiMAX, LTE, Ev-DO, and others.

In various implementations, the computer device 500 may be a vehicle system manager, a laptop, a netbook, a notebook, an ultrabook, a smartphone, a computer tablet, a personal digital assistant (PDA), a desktop computer, smart glasses, or a server. In further implementations, the computer device 500 may be any other electronic device that processes data.

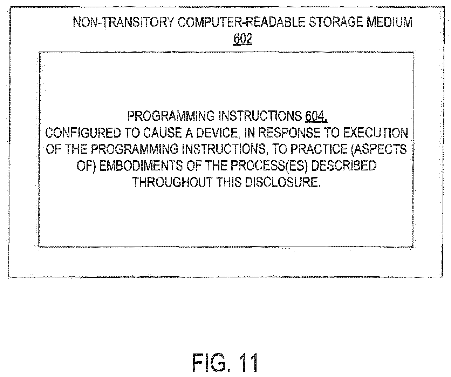

As will be appreciated by one skilled in the art, the present disclosure may be embodied as methods or computer program products. Accordingly, the present disclosure, in addition to being embodied in hardware as earlier described, may take the form of an entirely software embodiment (including firmware, resident software, micro-code, etc.) or an embodiment combining software and hardware aspects that may all generally be referred to as a "circuit," "module" or "system." Furthermore, the present disclosure may take the form of a computer program product embodied in any tangible or non-transitory medium of expression having computer-usable program code embodied in the medium. Fig. 11 illustrates an example computer-readable non-transitory storage medium that may be suitable for use to store instructions that cause an apparatus, in response to execution of the instructions by the apparatus, to practice selected aspects of the present disclosure. As shown, non-transitory computer-readable storage medium 602 may include a number of programming instructions 604. Programming instructions 604 may be configured to enable a device, e.g., computer 500, in response to execution of the programming instructions, to implement (aspects of) process 100 and/or vehicle controller 206. In alternate embodiments, programming instructions 604 may be disposed on multiple computer-readable non-transitory storage media 602 instead. In still other embodiments, programming instructions 604 may be disposed on computer-readable transitory storage media 602, such as, signals.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non- exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

It will be apparent to those skilled in the art that various modifications and variations can be made in the disclosed embodiments of the disclosed device and associated methods.

## Claims

1. A computer-implemented method (100) comprising:
sensing (102) a position of an operator platform (1502) equipped to a vehicle;
enabling (106) the vehicle to operate in a full-speed mode when the operator platform (201, 1502) is positioned within a first range of positions (318) corresponding to riding operation; and
enabling (114) the vehicle to operate in an anti-trapping mode when the operator platform (201, 1502) is positioned within a second range of positions (310) separate from the first range of positions, **characterized in that**
the anti-trapping mode allowing the vehicle to move only in a direction that allows the operator platform (201, 1502) to open.

2. The computer-implemented method of claim 1, further comprising limiting the speed of the vehicle to below a predetermined speed when the anti-trapping mode is enabled.

3. The computer-implemented method of claim 1 or 2, further comprising:
enabling (110) the vehicle to operate in a speed-limited mode when the operator platform (201, 1502) is positioned within a third range of positions (306) corresponding to walking operation, the third range of positions (310) adjacent to the second range of positions (310); and
disabling (116) the vehicle from operation when the operator platform (201, 1502) is positioned outside of the first range (318), second range (310), and third range of positions (306).

4. The computer-implemented method of any of claims 1-3, wherein:
the sensed position of the operator platform (201, 1502) is an angular position;
the first range of positions (318) are between a fully open angular position (316) and a first partially closed angular position (312); and
the second range of positions (310) are between the first partially closed angular position (312) and a second partially closed angular position (304).

5. A data-processing apparatus comprising a processor or discrete controller (206) adapted to perform the computer-implemented method (100) of any of claims 1-4.

6. A computer program comprising instructions which, when the program is executed by a computer (500), cause the computer (500) to carry out the steps of the computer-implemented method (100) of any of claims 1-4.

7. A computer-readable storage medium (602) comprising instructions which, when executed by a computer (500), cause the computer (500) to carry out the steps of the computer-implemented method (100) of any of claims 1-4.

8. A system (200) for inhibiting trapping of an operator of a vehicle, comprising:
an operator platform (201, 1502) coupleable to the vehicle;
a position sensor (202, 204) arranged to detect a position of the operator platform (201, 1502) relative to the vehicle; and
a controller (206) to control a speed of the vehicle,
wherein:
the controller (206) enables the vehicle to move at full speed when the position sensor (202, 204) detects the operator platform (201, 1502) within a first range of positions (318) corresponding to riding operation, and
the controller (206) enables the vehicle to operate at a predetermined limited speed, when the position sensor (202, 204) detects the operator platform (201, 1502) at a second range of positions (310) separate from the first range of positions;
**characterized in that**,
the controller (206) enables the vehicle to operate only in a direction that allows the operator platform (201, 1502) to open, when the position sensor (202, 204) detects the operator platform (201, 1502) at the second range of positions (310) separate from the first range of positions (318).

9. The system of claim 8, wherein the position sensor (202, 204) is an angular position sensor, the first range of positions (318) are between a fully open angular position (316) and a first partially closed angular position (312), and the second range of positions (310) are between the first partially closed angular position (312) and a second partially closed angular position (304).

10. The system of claim 8 or 9, wherein the controller (206) enables the vehicle to operate at a second predetermined limited speed when the position sensor (202, 204) detects the operator platform (201, 1502) at a third range of positions (306) corresponding to walking operation.

11. The system of claim 10, wherein the third range of positions (306) is adjacent to the second range of positions (310).

12. The system of claim 10 or 11, wherein the controller (206) disables the vehicle from moving when the position sensor (202, 204) detects the operator platform (201, 1502) outside of the first (318), second (310), and third range of positions 306).

13. The system of any of claims 10-12, wherein:
the position sensor (202, 204) is an angular position sensor;
the first range of positions (318) corresponds to a sensed angle range from -5 degrees to +5 degrees, where 0 degrees corresponds to a platform position that is approximately parallel to a ground plane;
the second range of positions (310) corresponds to a sensed angle range from +45 degrees to +85 degrees; and
the third range of positions (306) corresponds to a sensed angle range from +85 degrees to +95 degrees, where 90 degrees corresponds to a platform position that is approximately perpendicular to the ground plane.

14. The system of any of claims 8-13, wherein the position sensor (202, 204) comprises two position sensors (202, 204) arranged to output complementary signals.

15. The system of any of claims 8-14, further comprising the vehicle.

## Patentansprüche

1. Computerimplementiertes Verfahren (100), umfassend:
Erfassen (102) einer Position einer Bedienerplattform (1502), die mit einem Fahrzeug ausgestattet ist;
Ermöglichen (106), dass das Fahrzeug in einem Vollgeschwindigkeitsmodus betrieben wird, wenn die Bedienerplattform (201, 1502) innerhalb eines ersten Bereichs von Positionen (318) positioniert ist, die einem Fahrbetrieb entsprechen; und
Ermöglichen (114), dass das Fahrzeug in einem Einklemmschutzmodus betrieben wird, wenn die Bedienerplattform (201, 1502) innerhalb eines zweiten Bereichs von Positionen (310) positioniert ist, der vom ersten Bereich von Positionen getrennt ist, **dadurch gekennzeichnet, dass**
der Einklemmschutzmodus ermöglicht, dass sich das Fahrzeug nur in eine Richtung bewegt, die ermöglicht, dass sich die Bedienerplattform (201, 1502) öffnet.

2. Computerimplementiertes Verfahren nach Anspruch 1, ferner umfassend das Begrenzen der Geschwindigkeit des Fahrzeugs auf unter eine vorbestimmte Geschwindigkeit, wenn der Einklemmschutzmodus aktiviert ist.

3. Computerimplementiertes Verfahren nach Anspruch 1 oder 2, ferner umfassend:
Ermöglichen (110), dass das Fahrzeug in einem geschwindigkeitsbegrenzten Modus betrieben wird, wenn die Bedienerplattform (201, 1502) innerhalb eines dritten Bereichs von Positionen (306) positioniert ist, die einem Gehbetrieb entsprechen, wobei der dritte Bereich von Positionen (310) an den zweiten Bereich von Positionen (310) angrenzt; und
Deaktivieren (116) des Betriebs des Fahrzeugs, wenn die Bedienerplattform (201, 1502) außerhalb des ersten Bereichs (318), des zweiten Bereichs (310) und des dritten Bereichs von Positionen (306) positioniert ist.

4. Computerimplementiertes Verfahren nach einem der Ansprüche 1-3, wobei:
die erfasste Position der Bedienerplattform (201, 1502) eine Winkelposition ist;
der erste Bereich von Positionen (318) zwischen einer vollständig geöffneten Winkelposition (316) und einer ersten teilweise geschlossenen Winkelposition (312) liegt; und
der zweite Bereich von Positionen (310) zwischen der ersten teilweise geschlossenen Winkelposition (312) und einer zweiten teilweise geschlossenen Winkelposition (304) liegt.

5. Datenverarbeitungsvorrichtung, umfassend einen Prozessor oder eine diskrete Steuerung (206), die angepasst ist, um das computerimplementierte Verfahren (100) nach einem der Ansprüche 1-4 durchzuführen.

6. Computerprogramm, umfassend Anweisungen, die, wenn das Programm von einem Computer (500) ausgeführt wird, den Computer (500) veranlassen, die Schritte des computerimplementierten Verfahrens (100) nach einem der Ansprüche 1-4 durchzuführen.

7. Computerlesbares Speichermedium (602), umfassend Anweisungen, die, wenn sie von einem Computer (500) ausgeführt werden, den Computer (500) veranlassen, die Schritte des computerimplementierten Verfahrens (100) nach einem der Ansprüche 1-4 durchzuführen.

8. System (200) zum Verhindern des Einklemmens eines Bedieners eines Fahrzeugs, umfassend:
eine Bedienerplattform (201, 1502), die mit dem Fahrzeug koppelbar ist;
einen Positionssensor (202, 204), der angeordnet ist, um eine Position der Bedienerplattform (201, 1502) relativ zu dem Fahrzeug zu erfassen; und
eine Steuerung (206), um eine Geschwindigkeit des Fahrzeugs zu steuern,
wobei:
die Steuerung (206) dem Fahrzeug ermöglicht, sich mit voller Geschwindigkeit zu bewegen, wenn der Positionssensor (202, 204) die Bedienerplattform (201, 1502) innerhalb eines ersten Bereichs von Positionen (318) erfasst, die einem Fahrbetrieb entsprechen, und
die Steuerung (206) dem Fahrzeug ermöglicht, mit einer vorbestimmten begrenzten Geschwindigkeit betrieben zu werden, wenn der Positionssensor (202, 204) die Bedienerplattform (201, 1502) in einem zweiten Bereich von Positionen (310) erfasst, der vom ersten Bereich von Positionen getrennt ist;
**dadurch gekennzeichnet, dass**
die Steuerung (206) dem Fahrzeug ermöglicht, nur in eine Richtung betrieben zu werden, die ermöglicht, dass sich die Bedienerplattform (201, 1502) öffnet, wenn der Positionssensor (202, 204) die Bedienerplattform (201, 1502) in dem zweiten Bereich von Positionen (310) erfasst, der vom ersten Bereich von Positionen (318) getrennt ist.

9. System nach Anspruch 8, wobei der Positionssensor (202, 204) ein Winkelpositionssensor ist, der erste Bereich von Positionen (318) zwischen einer vollständig geöffneten Winkelposition (316) und einer ersten teilweise geschlossenen Winkelposition (312) liegt und der zweite Bereich von Positionen (310) zwischen der ersten teilweise geschlossenen Winkelposition (312) und einer zweiten teilweise geschlossenen Winkelposition (304) liegt.

10. System nach Anspruch 8 oder 9, wobei die Steuerung (206) dem Fahrzeug ermöglicht, mit einer zweiten vorbestimmten begrenzten Geschwindigkeit betrieben zu werden, wenn der Positionssensor (202, 204) die Bedienerplattform (201, 1502) in einem dritten Bereich von Positionen (306) erfasst, die einem Gehbetrieb entsprechen.

11. System nach Anspruch 10, wobei der dritte Bereich von Positionen (306) an den zweiten Bereich von Positionen (310) angrenzt.

12. System nach Anspruch 10 oder 11, wobei die Steuerung (206) die Bewegung des Fahrzeugs deaktiviert, wenn der Positionssensor (202, 204) die Bedienerplattform (201, 1502) außerhalb des ersten (318), zweiten (310) und dritten Bereichs von Positionen (306) erfasst.

13. System nach einem der Ansprüche 10-12, wobei:
der Positionssensor (202, 204) ein Winkelpositionssensor ist;
der erste Bereich von Positionen (318) einem erfassten Winkelbereich von -5 Grad bis +5 Grad entspricht, wobei 0 Grad einer Plattformposition entspricht, die ungefähr parallel zu einer Bodenebene ist;
der zweite Bereich von Positionen (310) einem erfassten Winkelbereich von +45 Grad bis +85 Grad entspricht; und
der dritte Bereich von Positionen (306) einem erfassten Winkelbereich von +85 Grad bis +95 Grad entspricht, wobei 90 Grad einer Plattformposition entspricht, die ungefähr senkrecht zu der Bodenebene ist.

14. System nach einem der Ansprüche 8-13, wobei der Positionssensor (202, 204) zwei Positionssensoren (202, 204) umfasst, die angeordnet sind, um komplementäre Signale auszugeben.

15. System nach einem der Ansprüche 8-14, ferner umfassend das Fahrzeug.

## Revendications

1. Un procédé mis en œuvre par calculateur (100), comprenant :
la détection (102) d'une position d'une plateforme d'opérateur (1502) équipant un véhicule ;
l'activation (106) du véhicule pour qu'il fonctionne dans un mode à pleine vitesse lorsque la plateforme d'opérateur (201, 1502) est positionnée dans les limites d'une première plage de positions (318) correspondant à un fonctionnement monté ; et
l'activation (114) du véhicule pour qu'il fonctionne dans un mode anti-piégeage lorsque la plateforme d'opérateur (201, 1502) est positionnée dans les limites d'une seconde plage de positions (310) distincte de la première plage de positions, **caractérisé en ce que**
le mode anti-piégeage ne permet au véhicule de se déplacer que dans une direction qui autorise l'ouverture de la plateforme d'opérateur (201, 1502).

2. Le procédé mis en œuvre par calculateur de la revendication 1, comprenant en outre la limitation de la vitesse du véhicule à une valeur inférieure à une vitesse prédéterminée, lorsque le mode anti-piégeage est activé.

3. Le procédé mis en œuvre par calculateur de la revendication 1 ou 2, comprenant en outre :
l'activation (110) du véhicule pour qu'il fonctionne dans un mode à vitesse limitée lorsque la plateforme d'opérateur (201, 1502) est positionnée dans les limites d'une troisième plage de positions (306) correspondant à un fonctionnement piéton, la troisième plage de positions (310) étant adjacente à la seconde plage de positions (310) ; et
la désactivation (116) du fonctionnement du véhicule lorsque la plateforme d'opérateur (201, 1502) est positionnée hors de la première plage (318), de la seconde plage (310) et de la troisième plage (306) de positions.

4. Le procédé mis en œuvre par calculateur de l'une des revendications 1 à 3, dans lequel :
la position détectée de la plateforme d'opérateur (201, 1502) est une position angulaire ;
la première plage de positions (318) est comprise entre une position angulaire totalement ouverte (316) et une première position angulaire partiellement fermée (312) ; et
la seconde plage de positions (310) est comprise entre la première position angulaire partiellement fermée (312) et une seconde position angulaire partiellement fermée (304) .

5. Un appareil de traitement de données comprenant un processeur ou un contrôleur séparé (206), aptes à mettre en œuvre le procédé mis en œuvre par calculateur (100) de l'une des revendications 1 à 4.

6. Un programme informatique comprenant des instructions qui, lorsque le programme est exécuté par un calculateur (500), font en sorte que le calculateur (500) effectue les étapes du procédé mis en œuvre par calculateur (100) de l'une des revendications 1 à 4.

7. Un support de stockage lisible par calculateur (602) comprenant des instructions qui, lorsqu'elles sont exécutées par un calculateur (500), font en sorte que le calculateur (500) effectue les étapes du procédé mis en œuvre par calculateur (100) de l'une des revendications 1 à 4.

8. Un système (200) pour empêcher le piégeage d'un opérateur d'un véhicule, comprenant :
une plateforme d'opérateur (201, 1502) pouvant être couplée au véhicule ;
un capteur de position (202, 204) agencé pour détecter une position de la plateforme d'opérateur (201, 1502) par rapport au véhicule ; et
un contrôleur (206) pour contrôler une vitesse du véhicule,
dans lequel :
le contrôleur (206) active le véhicule pour qu'il se déplace à pleine vitesse lorsque le capteur de position (202, 204) détecte la plateforme d'opérateur (201, 1502) dans les limites d'une première plage de positions (318) correspondant à un fonctionnement monté, et
le contrôleur (206) active le véhicule pour qu'il fonctionne à une vitesse limitée prédéterminée, lorsque le capteur de position (202, 204) détecte la plateforme d'opérateur (201, 1502) au niveau d'une seconde plage de positions (310) distincte de la première plage de positions ;
**caractérisé en ce que**
le contrôleur (206) active le véhicule pour qu'il ne fonctionne que dans une direction qui autorise l'ouverture de la plateforme d'opérateur (201, 1502), lorsque le capteur de position (202, 204) détecte la plateforme d'opérateur (201, 1502) au niveau de la seconde plage de positions (310) distincte de la première plage de positions (318).

9. Le système de la revendication 8, dans lequel le capteur de position (202, 204) est un capteur de position angulaire, la première plage de positions (318) est comprise entre une position angulaire totalement ouverte (316) et une première position angulaire partiellement fermée (312), et la seconde plage de positions (310) est comprise entre la première position angulaire partiellement fermée (312) et une seconde position angulaire partiellement fermée (304).

10. Le système de la revendication 8 ou 9, dans lequel le contrôleur (206) active le véhicule pour qu'il fonctionne à une seconde vitesse limitée prédéterminée lorsque le capteur de position (202, 204) détecte la plateforme d'opérateur (201, 1502) au niveau d'une troisième plage de positions (306) correspondant à un fonctionnement piéton.

11. Le système de la revendication 10, dans lequel la troisième plage de positions (306) est adjacente à la seconde plage de positions (310).

12. Le système de la revendication 10 ou 11, dans lequel le contrôle (206) désactive le déplacement du véhicule de lorsque le capteur de position (202, 204) détecte la plateforme d'opérateur (201, 1502) hors de la première (318), de la seconde (310), et de la troisième (306) plages de positions.

13. Le système de l'une des revendications 10 à 12, dans lequel :
le capteur de position (202, 204) est un capteur de position angulaire ;
la première plage de positions (318) correspond à une plage d'angles détectés comprise entre -5 degrés et +5 degrés, 0 degré correspondant à une position de la plateforme qui est approximativement parallèle à un plan du sol ;
la seconde plage de positions (310) correspond à une plage d'angles détectés comprise entre +45 degrés et +85 degrés ; et
la troisième plage de positions (306) correspond à une plage d'angles détectés comprise entre +85 degrés et +95 degrés, 90 degrés correspondant à une position de la plateforme qui est approximativement perpendiculaire au plan du sol.

14. Le système de l'une des revendications 8 à 13, dans lequel le capteur de position (202, 204) comprend deux capteurs de position (202, 204) agencés pour délivrer des signaux complémentaires.

15. Le système de l'une des revendications 8 à 14, comprenant en outre le véhicule.
